# EUROPEAN PATENT APPLICATION

(11) **EP 2 908 123 A1**
(43) Date of publication of application: **19.08.2015**
(21) Application number: 14000560.4
(22) Date of filing: 17.02.2014
(51) Int. Cl.: G01N 29/02, G01N 29/036, G01N 29/24, G01N 21/17

(54) **Measuring device and method for determining mass and mechanical properties of a biological system**

(71) Applicant: Universität Basel, 4003 Basel (CH); ETH Zürich, 8092 Zürich (CH)
(72) Inventor: Martinez-Martin, David, CH - 4054 Basel (CH); Gerber, Christoph, CH - 8805 Richterswil (CH); Bircher, Benjamin, CH - 4055 Basel (CH); Martin, Sascha, CH - 4055 Basel (CH); Müller, Daniel, CH - 4051 Basel (CH)
(74) Representative: Sattler de Sousa e Brito, Clara

(57) **Abstract**

The invention relates to a measuring device and a method for determining mass and mechanical properties of a biological system. The invention is based on the use of a micro-cantilever which is excited by an intensity-modulated laser and functionalized to adhere to the biological system.

## Description

The invention relates to a measuring device and a method for determining mass and mechanical properties of a biological system.

Measuring devices for determining mass and mechanical properties of biological systems are known from the state of the art.

In Park K, Jang J, Irimia D, Sturgis J, Lee J, Robinson JP, Toner M, Bashir R. Living cantilever arrays for characterization of mass of single live cells in fluids. Lab on a Chip. 8:1034-41 (2008) cantilever arrays are developed to determine mass of cells in solution. These arrays are formed by two sets of cantilevers opposing each other. External sinusoidal power sources are connected to the opposing cantilever sets with a phase shift of 180° in order to generate a non-uniform electric field, which captures cells by dielectrophoresis. There is no active excitation method to oscillate the cantilevers. The cantilevers vibrate only due to thermal noise, which decreases the sensitivity and temporal resolution of this device to measure mass changes. Before starting mass measurements, several days, usually three days, are required for the cells to grow on the cantilevers. That means random cells are selected for the experiments. Due to the design of this device, its use is not compatible with modern optical microscopy techniques for biology, for example differential interference contrast (DIC), fluorescence, confocal or phase contrast microscopy. These techniques are very important in biology since they give additional morphological and functional information about the characterized cell or biological system.

The work of Park K, Millet LJ, Kim N, Li H, Jin X, Popescu G, Aluru NR, Hsia KJ, Bashir R. Measurement of adherent cell mass and growth. PNAS, 107: 20691-6 (2010) shows a device that uses micro-membrane resonators to determine the mass and mechanical properties of single adherent cells in fluid. The membranes are actively excited using the Lorentz's force. To do that the membranes are immersed into a uniform magnetic field and an alternating electrical current flows through the membranes. The movement of the membrane is detected by using a laser Doppler interferometer (LDI). In order to attach cells to the membranes, cells are cultured on the device. Doing so, some cells will randomly adhere to the top of the membranes. Once the cells are injected into the device, at least two hours of waiting time are required before starting the measurements, which importantly limits the cellular processes to be studied. This system is compatible with fluorescence but not with DIC or phase contrast microscopy.

The device in S. Son, A. Tzur, Y. Weng, P. Jorgensen, J. Kim, M. W. Kirschner, S. R. Manalis. Direct observation of mammalian cell growth and size regulation. Nat. Methods. 9:910-2 (2012) is based on a micro-channel resonator, which is a hollow cantilever surrounded by vacuum. Suspended cells floating in a fluid can be pumped into and through the cantilever. When a cell passes by the free end of the cantilever, its buoyant mass increases the total mass of the cantilever, which decreases the resonance frequency of the cantilever. Furthermore, high-resolution fluorescence microscopy can be conducted only for cells passing through a separate reservoir but not when cells pass the mass sensor. This tool is not suitable for adherent cells, since the cells have to be suspended to be able to float through the cantilever. Furthermore, some cellular processes cannot be studied because the device can only detect buoyant masses. Another negative issue of this assay is that both the fluorescence signal (e.g., microscopy) and the buoyant mass of a single cell can be neither acquired continuously over a long period (>> 1 second) nor simultaneously, making it very difficult to correlate buoyant mass and cell state.

It is an object of the invention to improve these known devices.

According to a first aspect of the invention, a solution to this technical problem is achieved by providing a measuring device for determining mass and mechanical properties of a biological system comprising a micro cantilever and an intensity modulated laser exciting the cantilever, wherein the cantilever is functionalized to adhere to the biological system.

A "biological system" is e.g., a cell, a group of cells or a small tissue. The cells can be adherent or non-adherent and of various origins, such as human, animal, yeast and bacteria. The measuring device allows determining mass and mechanical properties of biological systems such as single cells or small tissues over time and in a physiologically relevant environment. Furthermore, the measuring device is useful to study cell-cell- or cell-tissue-interactions.

To adhere to a biological system such as a cell, the cantilever is functionalized. Functionalization can in particular be chemical functionalization. As an alternative to a chemical functionalization of the cantilever, also other methods to adhere the biological system to the cantilever are possible. In particular, a micro-channelled cantilever can be used that adheres the biological system to the cantilever by means of a suction mechanism. On rare occasions, functionalization cannot be necessary if the biological system adheres to the cantilever without specific binding means. These alternatives will be considered equivalent to the chemical functionalization by a person skilled in the art.

Single cells (or groups of cells) can be attached to the cantilever by putting them in direct contact with the cantilever. The measuring system can choose and pick up a certain cell among a cell population in culture, thereby allowing a targeted measurement of mass and mechanical properties of a chosen cell. Also a measurement of non-adherent cells is possible, since they can be immobilized at the end of the cantilever. This allows a measurement in a very short time period, because measurement can be commenced as soon as the cell is picked up. A measurement can therefore usually start within seconds or in a maximum of a few minutes. The measuring device is capable of measuring the buoyant, as well as the total mass. It can also be used to study mechanical properties of cells such as adhesion, stiffness or rheological properties. Furthermore, the measuring device is able to bring a single cell in contact with or close to another cell or tissue, in order to study the cellular interactions between cells and tissues.

The measuring device uses the principle of photothermal excitation of the cantilever, thereby allowing the measuring device to increase the mass sensitivity and the temporal resolution. To directly excite the cantilever and not any other part of the device, which could introduce noise, an intensity modulated laser is addressed on the cantilever. This laser produces a very localized, modulated heating that accordingly excites the cantilever. The laser can be digitally and/or analogically modulated. The cantilever is absorbent i.e. also partially absorbent for the wavelength of the laser. The material of the cantilever can be silicon, but other materials with similar properties may be used as well. The cantilever does not require any coating layer to be excited with the laser, however this may also be fully or partially coated with metals. Preferably the region where the biological sample is going to be placed is not coated with metal.

To increase the mass sensitivity, the functionalized side of the cantilever may be positioned close to the free end of the micro-cantilever. Accordingly, the cantilever may be fully or partially functionalized.

The detection of the mass and mechanical properties of the biological system comes from the analysis of a driven movement of the cantilever. The resonance frequency of the cantilever is a function of the mass of the cantilever. When a biological sample is attached to the cantilever, the mass of the cantilever changes, which leads to changes in its resonance frequency. Checking the resonance frequency of the system based on the cantilever and the attached biological sample, the mass changes of the biological sample are tracked. From a comparison between the resonance frequency of the cantilever without the attached sample and the cantilever with the attached sample, the mass of the attached sample can be obtained. Furthermore, the measuring device is able to evaluate how fast the energy transferred to the cantilever is dissipated, which is a measurement of the dimensionless magnitude called quality factor or Q-factor. Both magnitudes, resonance frequency and Q-factor, can be influenced by the mechanical properties of the sample attached to the cantilever, which allows the device to be sensitive to both changes as well. Furthermore, the use of additional parameters to extract information is possible e.g., the phase (delay between excitation signal and the cantilever response) and the amplitude of the movement of the cantilever.

The system used to read out the movement of the cantilever is not as crucial as the cantilever excitation method and can be done using a variety of systems for example: beam deflection, piezo-resistive detection, Doppler interferometry, etc. This system allows acquiring for each frequency two main magnitudes of the movement of the cantilever: the amplitude and the phase. The amplitude is the maximum elongation of the cantilever for a given frequency; the phase is related to the response delay of the cantilever with respect to the excitation signal. Respective computation of the acquired information leads to the desired determination of mass and mechanical properties.

Advantageously, the cantilever is fully immersed in a buffer solution. This allows detecting the total mass of the biological system under physiological conditions. A fluid cell can be used.

A second and independently inventive aspect of the invention relates to a measuring device for determining mass and mechanical properties of a biological system comprising a micro cantilever and an intensity modulated laser exciting the cantilever, wherein the cantilever is transparent for a wavelength of the visual spectrum. The cantilever can be partially or totally transparent for the wavelength of the visual spectrum. Advantageously, the region, where the biological sample is going to be placed, is at least partially transparent for a certain wavelength of the visual spectrum. This allows for a combination of the determination of the mass and mechanical properties with important optical techniques in cell biology.

Preferably, the part of the cantilever that is close to its free end and partially transparent for at least some wavelength of the visual spectrum is not smaller than 10 µm.

A third and independently inventive aspect of the invention relates to a measuring device, wherein the measuring device for determining mass and mechanical properties of a biological system, comprising a micro cantilever and an intensity modulated laser exciting the cantilever, comprises an optical microscope, in particular a fluorescence microscope, a confocal microscope, a fluorescence energy transfer (FRET) microscope, a DIC and/or phase contrast microscope, all of those in particular as an inverted microscope. This combination of optical techniques in cell biology together with the measurement of the mass and the mechanical properties allows for a better understanding of the mass measurements, since the morphology of the cells can be observed. This allows the measuring device to detect cellular mass and correlate this information with cell state and shape.

The measuring device allows quantifying, at high temporal resolution and in a non-invasive manner, the mass and mechanical properties of single cells transitioning through the cell cycle by allowing continuously correlating cellular mass with cell phase and shape. Furthermore, the mass sensor can be customized either to study single cells or a small population of cells.

Preferably the cantilever has a length in the range of 10 µm to 1000 µm. For example for the case of measuring cells with a diameter of approximately 10 µm, the length of the cantilever may be around 75 µm. Furthermore, the cantilever preferably has a resonance frequency in a range of 1 Hz to 10 MHz, preferably in the range of 20 kHz to 400 kHz, when immersed in water. Within this range of the resonance frequency the system can be adapted to measure a single cell of about 10 microns in diameter. Finally the cantilever preferably has an oscillation amplitude in the range of 0,01 nm to 300 nm, preferably smaller than 30 nm. To optimize the measuring device it is possible to choose or adapt a cantilever according to the target biological system that will be measured by adapting the cantilever dimensions for different applications.

Preferably the wavelength of the laser is in a range from 350 nm to 750 nm. may be between 350 nm and 450 nm. Specifically a wavelength of 405 nm may be used which has the additional advantage that it is far enough from many of the wavelengths used in fluorescence microscopy. However, depending on the cantilever material other wavelengths may be used as well. In particular, the wavelength of the exciting laser is chosen such that it is strongly absorbed by the cantilever. Advantageously the position, diameter and focus of the laser spot on the cantilever may be adjusted and may be located at the base of the cantilever. This maximises the excitation efficiency. The laser spot may be smaller than 30 µm, preferably smaller than 10 µm. This size allows exciting the cantilever with high efficiency and at the same time allows having the laser far from the biological system. To increase the mass sensitivity, the biological sample is usually positioned close to the free end of the cantilever.

Additionally and advantageously, the spot of the laser on the micro-cantilever and the functionalized side on which the biological system adheres may be located on opposite faces of the cantilever, to prevent any influence on the cells to be studied.

A fourth aspect of the invention relates to a method for determining mass and mechanical properties of biological systems comprising the steps of
a. approaching a cantilever, in particular a cantilever of a measuring device according to the invention, to a chosen biological system,
b. attaching the biological system to the cantilever,
c. exciting the cantilever with a laser at a certain frequency,
d. measuring resonance frequency and/or amplitude and phase of the movement of the cantilever and
e. computing mass and mechanical properties of the biological system.

In case of the biological system being bound to a surface in step b, the cantilever may be approached to the sample to pick the sample up, and then withdrawn from the surface keeping the sample attached to the cantilever. Far away from the surface where the sample was sitting, steps d and e can be performed. Additionally, a measurement may be performed without withdrawal of the cantilever. However, in this case the cantilever is not able to oscillate freely and the obtained information must be interpreted accordingly.

A sweeping process through a frequency spectrum allows to determine the resonance frequency by mapping the movement of the cantilever, i.e. observing amplitude and phase.

This measuring method allows a targeted selection of cells and a specific measurement of the mass and mechanical properties. In particular a measurement not only of the buoyant mass but of the total mass of single cells is possible. Therefore, the micro cantilever can be fully immersed in a buffer solution.

The measuring method can further comprise the additional upfront steps of
a' exciting the cantilever with a laser at a certain frequency,
b' determining the resonance frequency of the cantilever.

This allows for a calibration on the cantilever, thereby allowing measuring of the total mass. The process using the active excitation by the laser to determine the resonance frequency is very accurate. However, it is also possible to use a calibration procedure to determine the resonance frequency of the cantilever based on thermal energy vibrations. Due to the thermal energy, which is related with the temperature of the cantilever, the cantilever is vibrating at the resonance frequency with very small amplitude. In some cases this amplitude is so small that it can be very difficult to detect. Using for example a spectrum analyser, this movement of the cantilever can be analysed and its resonance frequency measured. This method does not require actively exciting the cantilever, which is difficult when the cantilever is immersed in a liquid. This problem can be overcome as suggested by using an intensity modulated laser, which produces a very clean excitation and response of the cantilever.

The measuring method can further comprise the additional upfront steps of
a" choosing a biological system,
b" adapting the cantilever dimensions to the chosen biological system.

Tailoring the cantilever to the biological system increases the resolution of the measurement.

One way to adapt the cantilever to the biological system is by cutting down a piece of silicon, for example a big cantilever made of silicon, by using a focused ion beam. This technique allows ablation of materials with very high resolution, but other methods and techniques known to the person skilled in the art could be equally applied to produce the cantilever.

Furthermore, a feedback loop can be used. The use of one or several feedback loops increases the sensitivity and time resolution. In particular, a phase locked loop (PLL) can be used. Therein the phase of the cantilever is used as a control variable and the frequency of the signal to modulate the laser intensity is used as a manipulated variable. The control condition is to find the frequency of the excitation signal that produces a cantilever phase of π/2. With this system the resonance frequency of the cantilever can be tracked automatically and hence the mass changes can be directly measured.

Furthermore, a second feedback can be used independently or cumulatively to obtain further information about the biological system to be studied. This feedback uses the oscillation amplitude of the cantilever as the control variable and the amplitude of the signal used to modulate the intensity of the laser as the manipulated variable. Thereby it is ensured that the amplitude of the cantilever is kept constant over a long period of time. Doing so, information related to the damping of the system can be acquired.

Fundamental or higher flexural modes of the cantilever can be used.

The invention will be described in more detail hereinafter with reference to an exemplary embodiment. In the drawing,
- figure 1: shows a schematic representation of a measuring device,
- figure 2: shows a schematic representation of a measuring device with an optical microscope,
- figure 3: shows a schematic representation of a measuring device with an optical microscope at a higher level of detail,
- figure 4: shows a two-dimensional top view of a measuring device with arrows indicating the directions of movement,
- figure 5: shows a two-dimensional top view of the measuring device,
- figure 6: shows a two-dimensional bottom view of the measuring device,
- figure 7: shows a two-dimensional cross-sectional view of the measuring device,
- figure 8: shows a three-dimensional top view of the measuring device in a first perspective,
- figure 9: shows a three-dimensional top view of the measuring device in a second perspective,
- figure 10: shows a three-dimensional bottom view of the measuring device,
- figure 11: shows a three-dimensional cross-sectional view in a first perspective and
- figure 12: shows a three-dimensional cross-sectional view in a second perspective.

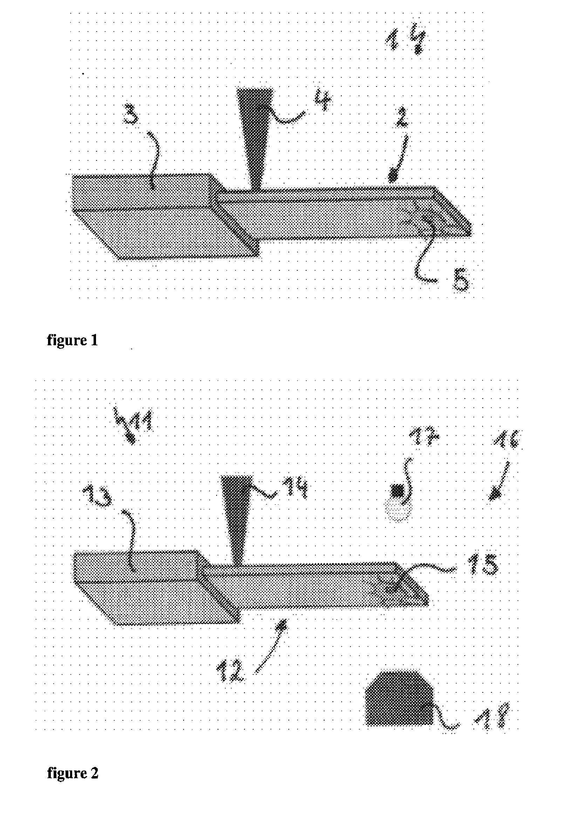

The measuring device 1 in figure 1 has a cantilever 2 in a fixation 3. The cantilever 2 is excited by the intensity modulated excitation laser 4. This allows for a direct excitation of the cantilever 2 by the intensity modulated laser 4 focused on the cantilever 2. The laser 4 produces very localised modulated heating that excites the cantilever 2. The position, diameter and the focus of this laser spot can be adjusted and it is usually located at the base of the cantilever 2 to maximise the excitation efficiency. A biological system 5 is usually positioned close to the free end of the micro-cantilever 2 to increase the mass sensitivity. Additionally, to prevent any influence on the biological system to be studied, the excitation laser 4 and the biological system 5, e.g. a cell or several cells, are preferably and advantageously located on opposite faces of the cantilever 2. Therefore, the functionalized side of the cantilever 2 is placed close to this free end. This whole arrangement can be placed within a fluid cell.

The measuring device 11 according to figure 2 comprises a cantilever 12 in a fixation 13 that is excited by an intensity modulated laser at the base of the cantilever 12. Again here, a biological sample 15 is bound by functionalization to the free end of the cantilever 12. Additionally the measuring device 11 is provided through an optical microscope 16 of a light source 17 and a lens system 18. The used microscope 16 is an inverted microscope.

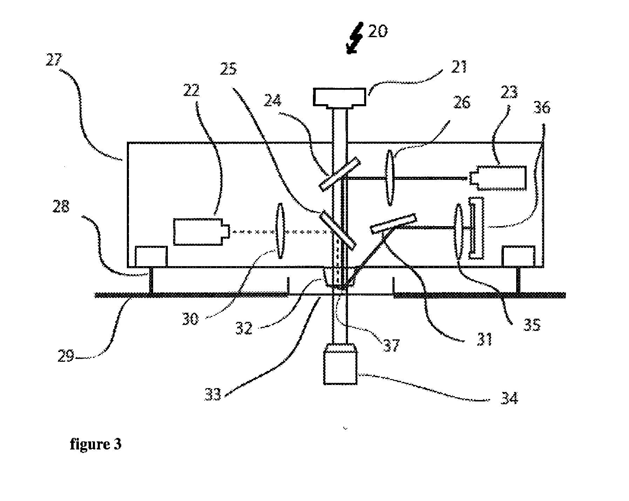

A measuring device 20 as shown in figure 3 combines a measuring device for determining mass mechanical properties of a biological system with an optical technique in cell biology. The DIC or phase contrast illumination 21 together with the inverted microscope 34 forms the respective optical part of the measuring device.

For the part of the measuring device that determines the mass and mechanical properties of a biological system the intensity modulated laser 22 emits a laser beam with a wavelength of for example 405 nm that is focused and reflected on the cantilever by the dichroic mirror 25 which reflects the wavelength of the laser, e.g. 405 nm, selectively. The laser spot diameter on the cantilever 37 can be modified by changing the position of the focus of the laser.

The cantilever 37 is held by the cantilever holder 32. A second optical path with the laser 23 reads of the movement of the cantilever 37. This laser 23 operates for example with a wavelength of 850 nm. The laser beam of this second laser (continuous line) is focused on the cantilever by the length system 26 and directed to the cantilever by the dichroic mirror 24 that is reflective for the wavelength of the second laser 23, e.g. 850 nm, selectively. After reflection of the laser beam at the cantilever, the beam is again redirected by the mirror 31 though a bandpass optical filter 35, which is centered at the respective wavelength for example 850 nm before it hits the photodiode 36, which allows detecting the movement the cantilever by detecting the movement of the laser beam. To allow for a movement of the cantilever 37 with respect to the sample, (not shown) i.e. for the device to pick up with the cantilever 37 a certain sample lying on the sample holder 33, e.g. a Petri dish, actuators like actuator 28 are used to move the cantilever in a vertical direction. Additionally, the platform 29 is equipped with two XY-positioners to move the box for the apparatus 27 and the sample holder 33.

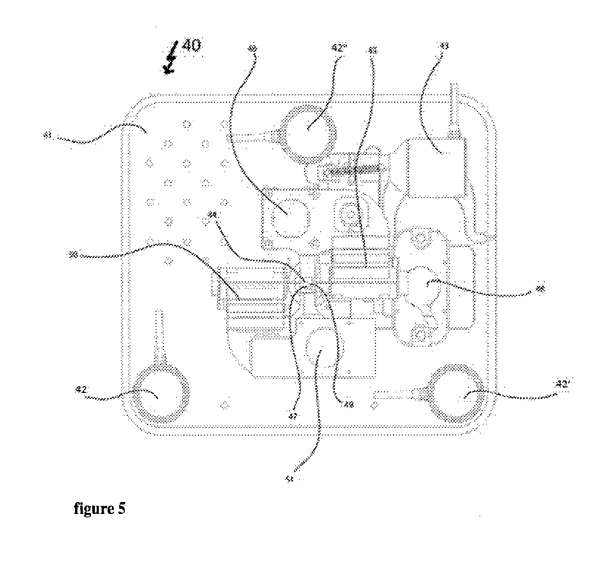

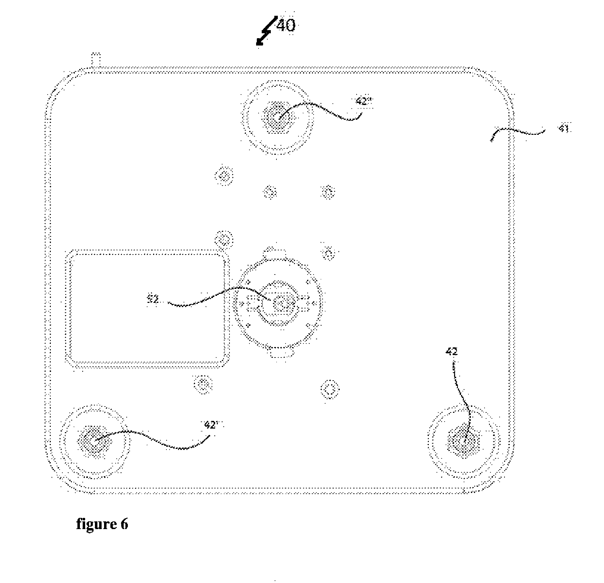

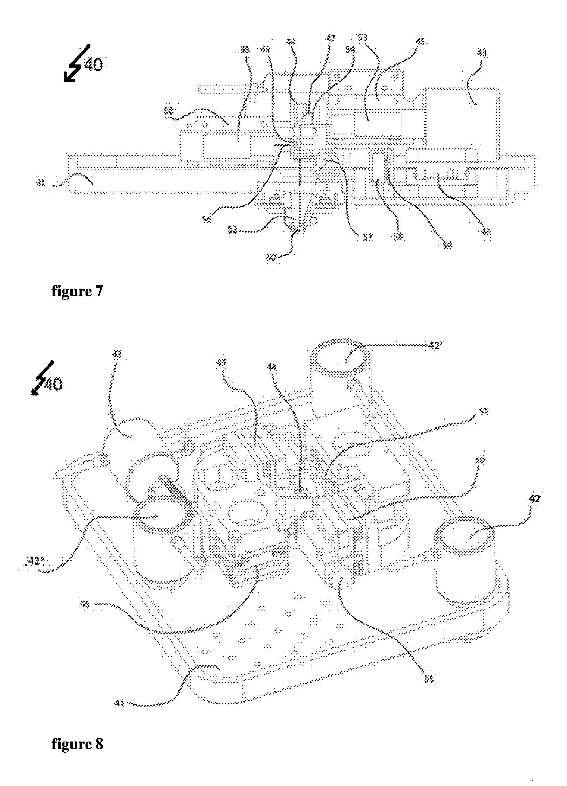

A measuring device 40 as shown for a working example in figures 5 to 8 combines a measuring device for determining mass and mechanical properties of a biological system with an optical technique in cell biology. However, here, the optical microscope is not shown. Also not shown is a lower part of the measuring device that holds the sample.

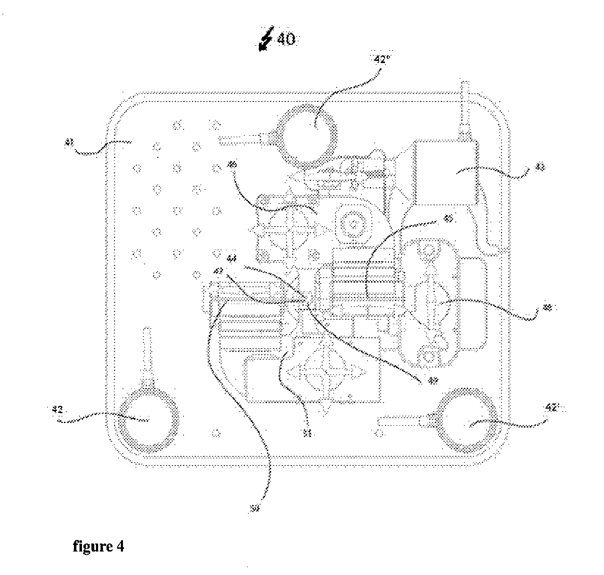

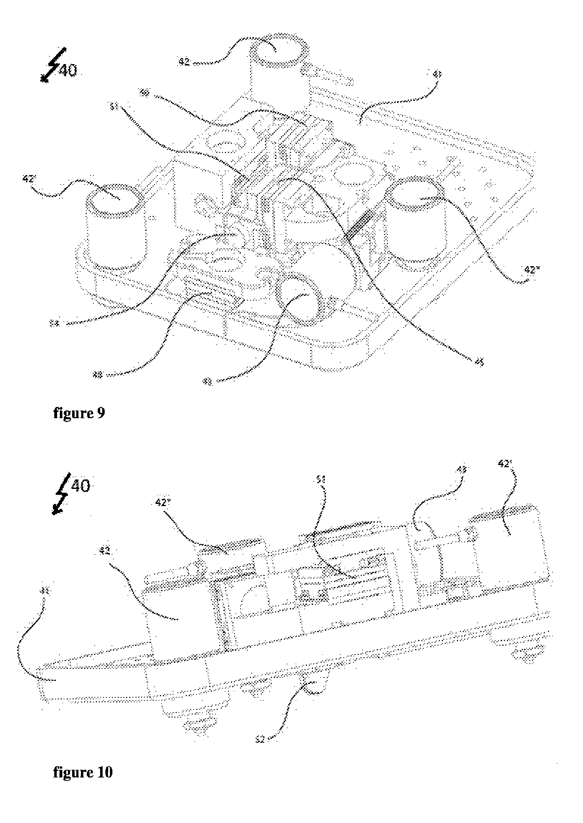

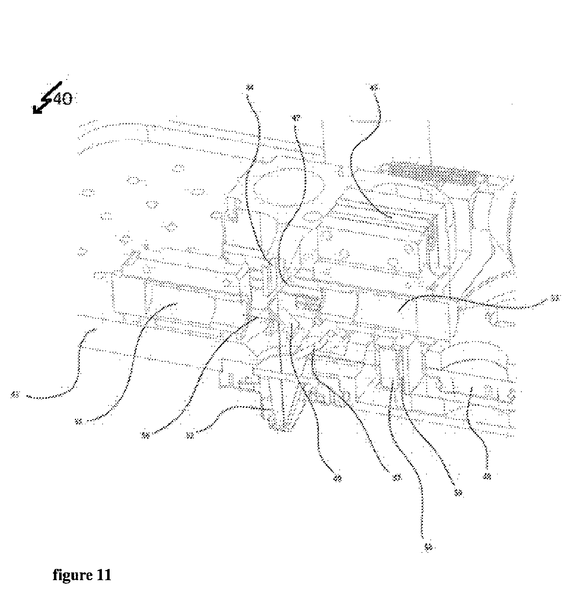

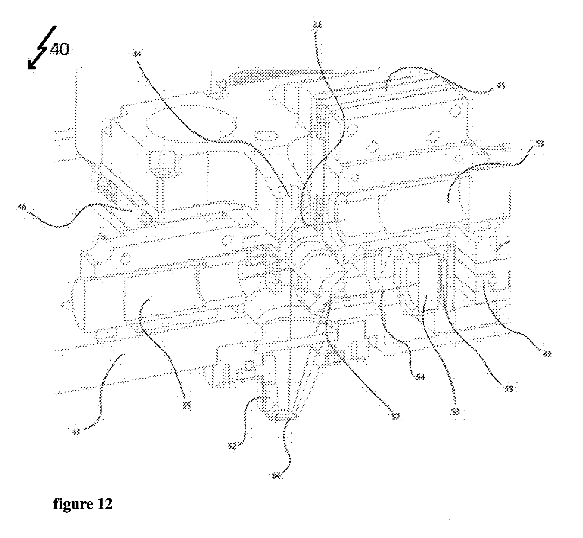

The upper part of the measuring device as shown in figures 4 to 12 allows for determining mass and mechanical properties of a biological system. A first optical path provides for excitation of the cantilever 60. An intensity modulated laser (not shown) emits a laser beam 56 at a wavelength of 405 nm. This laser beam 56 enters the measuring device 40 through the optical system 55 that focusses the 405 nm laser beam. This optical system 55 is held by two positioner systems a first positioner system 50 and a second positioner system 51. The first positioner system 50 holds the optical system 55 to focus the 405 nm laser beam 56. The first positioner system 50 can move as shown by the arrows in figure 4, which for example allows modifying the laser spot diameter on the cantilever 60. A second positioner system 51 holds the first positioner system 50 and the dichroic mirror 49. The dichroic mirror 49 reflects the 405 nm wavelengths allowing other wavelengths in the visual spectrum and the 850 wavelength to go through. This second positioner system 51 can move as shown by the arrows in figure 4, which allows positioning the 405 nm laser beam 56 to hit on a certain place as for instance the cantilever 60. This first optical path of the system 40 following the laser beam 56 thereby ensures an adjustable transfer of energy from the intensity modulated laser (not shown) to the cantilever 60. The cantilever 60 itself is held by the cantilever holder 62.

A second optical path following the laser beam 44 with a wavelength of 850 nm reads out the movement of the cantilever 60. This second laser beam 54 enters the measuring device through an optical system 53 to focus the 850 nm laser beam 54. The optical system 53 is held by two positioner systems, a first positioner system 45 and a second positioner system 46. Positioner system 45 holds the optical system 43 to focus the 850 nm laser beam 54. This positioner system 45 can move as shown by the arrows in figure 4. This allows for example to modify the laser spot diameter on the cantilever 60. A second positioner system 46 holds the first positioner system 45 and a dichroic mirror 47. The dichroic mirror reflects the 850 nm wavelength, allowing other wavelength in the visual spectrum to go through. Also, this second positioner system 46 can move as shown by the arrows in figure 4. This allows for positioning the 850 nm laser beam 54 to hit on a certain place as for instance the cantilever 60. The reflection of the 850 nm laser beam by the cantilever 60 allows this optical path to read out the movement of the cantilever 60 continued by the mirror 57 to address the 850 nm laser beam towards the photodiode 59. The four-quadrant photodiode 59 allows reading out the movement of the cantilever 60 by detecting the position of the 850 nm laser beam 54. The mirror 57 can be rotated to allow positioning of the 850 nm laser beam 54 on the photodiode 59. Therefore, the actuator 43 moves the mirror 57 by spinning the mirror's holder. Additionally, a positioner system 48 allows moving the photodiode 59 as shown by the arrows in figure 4. This system for example can be used in combination with the actuator 43 to make the 850 nm laser 54 hit on a certain part of the photodiode 59. Furthermore, this second optical path contains a bandpass filter 58 that is centered at the wavelength of 850 nm. This bandpass filter 58 avoids other wavelengths very different than 850 nm to reach the photodiode 59 thereby increasing the signal to noise ratio for the photodiode 59 to dictate the 850 nm light and avoiding possible disturbances in the detection due to other wavelengths in the system.

The window 44 allows the combination with optical techniques by providing sufficient access for DIC, phase contrast or other illumination types.

The whole system that is placed on the base 41 of the box to hold the apparatus can be moved by the actuators 42, 42' and 42" that allow to move the box and hence the cantilever along the vertical direction. These actuators 42, 42' and 42" for example allow approaching and withdrawing the cantilever 60 to the sample (not shown).

## Claims

1. Measuring device for determining mass and mechanical properties of a biological system comprising a micro-cantilever and an intensity modulated laser exciting the cantilever, ***wherein*** the cantilever is functionalized to adhere to the biological system.

2. Measuring device according to claim 1, ***wherein*** the cantilever is fully immersed in a buffer solution.

3. Measuring device in particular according to claim 1 or 2, ***wherein*** the cantilever is transparent for a wavelength of the visual spectrum.

4. Measuring device in particular according to one of the claims 1 to 3, ***wherein*** the measuring device comprises an optical microscope, in particular a fluorescence microscope, a confocal microscope, a fluorescence energy transfer (FRET) microscope, a DIC and/or phase contrast microscope, all of those in particular construed as an inverted microscope.

5. Measuring device according to one of the preceding claims, ***wherein*** the cantilever has a length in the range of 10 µm to 1000 µm, preferably in the size of 10 µm to 100 µm and/or a resonance frequency in a range of 1 Hz to 10 MHz, preferably in the range of 20 kHz to 400 kHz, when immersed in water and/or a oscillation amplitude in the range of 0,01 nm to 300 nm, preferably smaller than 30 nm and/or the laser has a wavelength in the range of 350 nm to 750 nm, preferably in a range of 350 nm to 450 nm.

6. Measuring device according to one of the preceding claims, ***wherein*** the laser is focused on a spot and the spot of the laser and the functionalized site are on opposite faces of the cantilever.

7. Measuring device, ***wherein*** the laser spot is focused on the base of the cantilever.

8. Measuring device according to one of the preceding claims, ***wherein*** the laser spot is smaller than 30 µm, preferably smaller than 10 µm.

9. Method for determining mass and mechanical properties of a biological system, comprising the steps of
a. approaching a cantilever, in particular a cantilever of a measuring device according to claims 1 to 8, to a chosen biological system.
b. attaching the biological system to the cantilever,
c. exciting the cantilever with a laser at a certain frequency,
d. measuring amplitude and phase of the movement of the cantilever.
e. determining mass and mechanical properties of the biological system.

10. Method according to claim 9, comprising the additional upfront steps of
a' exciting the cantilever with a laser with a certain frequency,
b' measuring the resonance frequency of the cantilever.

11. Method according to claim 9 or 10, comprising the additional upfront steps of
a" choosing a biological system,
b" adapting the cantilever dimensions to the chosen biological system.

12. Method according to claim 11, ***wherein*** a feedback loop is used.

13. Method according to claim 12, ***wherein*** the phase of the cantilever is used as a control variable and the frequency of the signal used to modulate the laser intensity is used as a manipulated variable.

14. Method according to claims 12 or 13, ***wherein*** the oscillation amplitude of the cantilever is used as the control variable and the amplitude of the signal used to modulate the laser intensity is used as a manipulated variable.

15. Method according to one of the claims 12 to 14, ***wherein*** fundamental and/or higher flexural modes of the cantilever are used.
